# EUROPEAN PATENT APPLICATION

(11) **EP 4 345 393 A1**
(43) Date of publication of application: **03.04.2024**
(21) Application number: 23199547.3
(22) Date of filing: 25.09.2023
(51) Int. Cl.: F24F 12/00, F24F 11/41, F24F 13/10, F24F 13/14

(54) **ADAPTABLE DEFROST DAMPER FOR ADJUSTABLE PORT VENTILATOR**

(30) Priority: 28.09.2022 US 202263377399 P
(71) Applicant: Carrier Corporation, Palm Beach Gardens, FL 33418 (US)
(72) Inventor: MCKINNEY, Peter, Boulder (US); SILVA, Michael, East Syracuse (US)
(74) Representative: Dehns

(57) **Abstract**

A ventilator (100) having a functionality to defrost a ventilator core (150) includes two sets of ports, one set used for coupling of the ventilator with ducting and other used for redirecting indoor air flowing along a first flowpath (116) through the recovery core to a second flowpath (118) normally used for outdoor air. A re-circulator (300) is removably fixed between an inlet for outdoor air and an outlet for indoor air of the set of ports not coupled to the ducting. A pair of dampers (164, 166), operated by a single motor (160), allow the ventilator to be operated in a mode that enables redirection of the indoor air from the first flowpath to the second flowpath, simultaneously blocking inflow of the outdoor air.

## Description

### BACKGROUND

Exemplary embodiments pertain to the art of ventilators for supply of fresh air and exhausting stale air from enclosed spaces. More particularly, the present disclosure relates to an adaptable defrost damper for an adjustable port ventilator.

When an HRV core in a ventilator freezes, a way to rapidly defrost the core is to "short circuit" the warm indoor air back through the core. Dampers are typically employed to re-direct the indoor air and block outdoor air. Three separate damper/motor assemblies are conventionally used, two to block outdoor airflows when the ventilator is either off or in defrost mode, and another damper to recirculate the indoor air back into the core. Three separate damper motors add cost to the product.

### BREIF DESCRIPTION

According to a first aspect, there is provided a ventilator comprising a housing, the housing having a first set of ports and a second set of ports. Each set of ports includes a first inlet, a first outlet, a second inlet and a second outlet. The housing includes a partition wall defining a first chamber, a first inlet chamber, a first outlet chamber, a second inlet chamber and a second outlet chamber. The first inlets of the two sets of ports are in fluidic communication with the first inlet chamber and the first outlets of the two sets of ports are in fluidic communication with the first outlet chamber. The second inlets of the two sets of ports are in fluidic communication with the second inlet chamber and the second outlets of the two sets of ports are in fluidic communication with the second outlet chamber. The housing defines a first flowpath extending from the first inlet chamber to the first outlet chamber, and a second flowpath extending from the second inlet chamber to the second outlet chamber. Each of the first flowpath and the second flowpath extends through the first chamber.

The ventilator includes a pair of dampers configured to move between a first position and a second position. In the first position the dampers close the second inlet and the first outlet of the second set of ports, and in the second position the dampers close the first outlet and the second inlet of the first set of ports.

The two dampers are coupled to a single motor for movement between the respective first position and the second position.

In accordance with additional or alternative embodiments, in the first position of the dampers, the first flowpath may be used for passage of a first fluid and the second flowpath may be used for a second fluid. The first chamber may be configured with a recovery core for transfer of heat between the first fluid and the second fluid.

In accordance with additional or alternative embodiments, the first outlet and the second inlet of the second set of ports may be fluidically coupled to each other, such that, in the second position of the dampers, when the dampers block outflow of the first fluid through the first outlet and inflow of the second fluid through the second inlet of the first set of ports, the first fluid from the first flowpath is recirculated to the second flowpath.

In accordance with additional or alternative embodiments, the first fluid may be warm air from a space and the second fluid may be cold ambient air. In the first position of the dampers, the ventilator may enable recovery of heat from the warm air, and in the second position of the dampers, the warm air passing through the first flowpath and the second flowpath may enable defrosting of the recovery core.

In accordance with additional or alternative embodiments, the first inlet and the second outlet of the second set of ports may be blocked.

In accordance with additional or alternative embodiments, the inlets and outlets of the first set of ports may be vertically disposed for installation of the ventilator with vertically oriented ducting, and the inlets and outlets of the second set of ports may be horizontally disposed for installation of the ventilator with horizontally oriented ducting.

In accordance with additional or alternative embodiments, when the second set of ports are used for installation of the ventilator with horizontally oriented ducting, the heat recovery may be achieved in the second position of the dampers, and defrosting of the recovery core may be achieved in the first position of the dampers.

In accordance with additional or alternative embodiments, when the second set of ports are used for installation of the ventilator with horizontally oriented ducting, the first outlet and the second inlet of the first set of ports may be fluidically coupled, and the first inlet and second outlet of the second set of ports may be blocked.

In accordance with additional or alternative embodiments, the ventilator may include a re-circulator to fluidically couple the first outlet and the second inlet of the first set of ports, or the first outlet and the second inlet of the second set of ports.

In accordance with additional or alternative embodiments, the re-circulator may include a first opening and a second opening spaced apart from the first opening, with a flow channel therebetween to fluidically couple the first opening and the second opening. The first and the second openings may be configured to be coupled to the first outlet and the second inlet of the first set of ports, and the first outlet and the second inlet of the second set of ports.

In accordance with additional or alternative embodiments, the dampers may be flap type dampers fixed to a common shaft. The shaft may be configured for rotation by the single motor such that rotation of the shaft in a first direction results in the flaps moving to the first position to close the second inlet and the first outlet of the second set of ports, and rotating the shaft in a second direction results in the flaps to move to the second position to close the first outlet and the second inlet of the first set of ports.

In accordance with additional or alternative embodiments, the dampers may be door shutter type dampers, having one or more flexible sheets guided in a pair of parallelly arranged guide rails, and coupled to a common shaft driven by the motor. Rotation of the shaft in a first direction may result in the sheets moving to the first position to close the second inlet and the first outlet of the second set of ports. On the other hand, rotating the shaft in the opposite direction may result in the sheet to move to the second position to close the first outlet and the second inlet of the first set of ports.

In accordance with additional or alternative embodiments, the shaft may include one or more pairs of gears that may be in engagement with perforations provided in the sheet to move the sheet as the shaft is rotated.

In accordance with additional or alternative embodiments, the flexible sheet may be made of a plastic material. The plastic material may have flexibility to wrap around the gears and yet have rigidity to prevent flow of a fluid through a corresponding opening of the inlets and outlets.

According to a second aspect of the invention, there is provided a method for defrosting a recovery core in a ventilator. The method includes the steps of providing a ventilator comprising a housing. The housing having a first set of ports and a second set of ports. Each set of ports having a first inlet, a first outlet, a second inlet and a second outlet. The housing having a partition wall defining a first chamber, a first inlet chamber, a first outlet chamber, a second inlet chamber and a second outlet chamber, The first inlets of the two sets of ports are in fluidic communication with the first inlet chamber and the first outlets of the two sets of ports are in fluidic communication with the first outlet chamber, the second inlets of the two sets of ports are in fluidic communication with the second inlet chamber and the second outlets of the two sets of ports are in fluidic communication with the second outlet chamber. The housing defines a first flowpath extending from the first inlet chamber to the first outlet chamber and a second flowpath extending from the second inlet chamber to the second outlet chamber, each of the first flowpath and the second flowpath extends through the first chamber.

The method includes the step of providing a pair of dampers configured to move between a first position and a second position, wherein in the first position the dampers close the second inlet and the first outlet of the second set of ports, and in the second position the dampers close the first outlet and the second inlet of the first set of ports.

The method includes the step of allowing warm air from a space to flow along a first flowpath extending from the first inlet chamber to the first outlet chamber, and ambient air along a second flowpath extending from the second inlet chamber to the second outlet chamber. Each of the first flowpath and the second flowpath extends through a recovery core provided in the first chamber.

The method further includes the step of moving, when a need to defrost the recovery core arises, the pair of dampers, by actuating a single motor coupled to the pair of dampers, from one of the first position and the second position to other of the first position and the second position, to block flow of the ambient air and to recirculate the warm air from the first flowpath through the second flowpath to defrost the recovery core.

In accordance with additional or alternative embodiments, the step of providing the ventilator may include coupling one of the first set and the second set of ports to a set of ducting.

In accordance with additional or alternative embodiments, the method may further include the step of coupling a re-circulator to the first outlet and the second inlet of other of the first set and second set of ports.

In accordance with additional or alternative embodiments, the method may further include the step of: blocking the first inlet and the second outlet of other of the first set and second set of ports.

In accordance with additional or alternative embodiments, the step of moving the pair of dampers may include: moving the dampers from the first position to the second position, when the first set of ports are coupled to the ducting, and moving the dampers from the second position to the first position, when the second set of ports are coupled to the ducting.

In accordance with additional or alternative embodiments, the step of providing the ventilator may include: configuring the first set of ports in vertical orientation to enable coupling of the ventilator to a set of vertically oriented ducting, and configuring the second set of ports in horizontal orientation to enable coupling of the ventilator to a set of horizontally oriented ducting.

Technical effects of embodiments of the present disclosure include ability to defrost a recovery core of the ventilator by actuating two dampers using a single motor. A further advantage is that the disclosed ventilator can be used with any of vertically disposed or horizontally disposed ducting without affecting defrosting functionality.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of an exemplary ventilator having defrosting functionality achieved by a pair of dampers operated by a single motor.
FIG. 2A is a schematic illustration of an exemplary flap type damper that enables operation of a pair of dampers by a single motor operated.
FIG. 2B is a schematic illustration of an exemplary door gate shutter type dampers that enables operation of a pair of dampers by a single motor.
FIGs. 3A and 3B are exemplary views of a re-circulator.

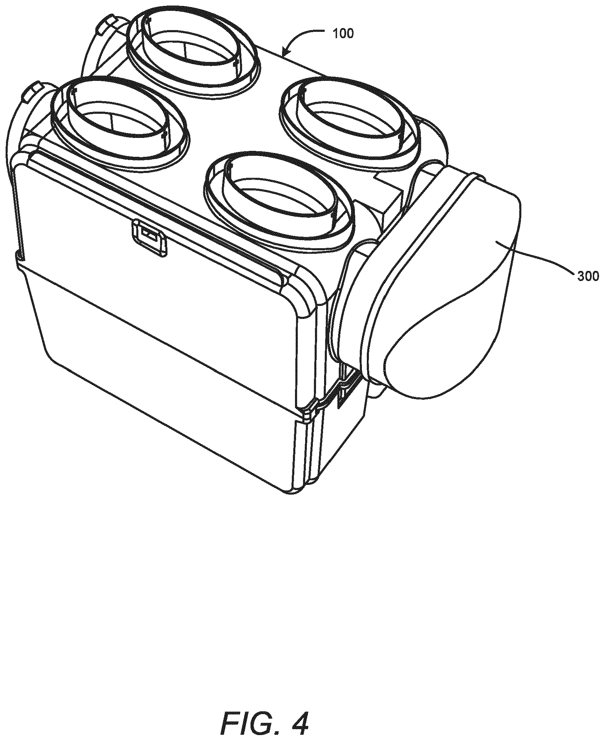

FIG. 4 is an exemplary perspective view showing the re-circulator of FIGs. 3Aand 3B coupled to inlet and outlet ports of the ventilator.
FIG. 5 is an exemplary method flow diagram for a method for defrosting recovery core in a ventilator.

### DETAILED DESCRIPTION

A detailed description of one or more embodiments of the disclosed apparatus and method are presented herein by way of exemplification and not limitation with reference to the Figures.

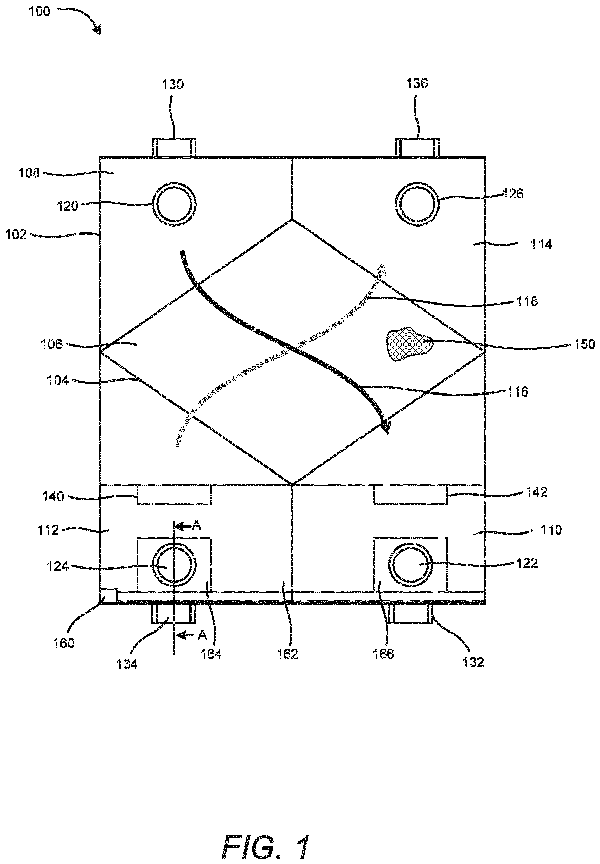

FIG. 1 is a schematic illustration of a ventilator 100. The ventilator can include a housing 102 having a first set of ports and a second set of ports. The first set of ports can include a first inlet 120, a first outlet 122, a second inlet 124 and a second outlet 126. The second set of ports can include a first inlet 130, a first outlet 132, a second inlet 134 and a second outlet 136

The housing 102 can further include a partition wall 104 defining a first chamber 106, a first inlet chamber 108, a first outlet chamber 110, a second inlet chamber 112 and a second outlet chamber 114. The first inlets 120, 130 of the two sets of ports can be in fluidic communication with the first inlet chamber 108 and the first outlets 122. 132 of the two sets of ports can be in fluidic communication with the first outlet chamber 110. The second inlets 124, 134 of the two sets of ports can be in fluidic communication with the second inlet chamber 112 and the second outlets 126, 136 of the two sets of ports can be in fluidic communication with the second outlet chamber 114.

The housing 102 of the ventilator 100 can be made from any suitable materials. For example, the housing 102 can be formed from one or more disparate materials, such as metals (e.g., aluminum, galvanized steel, and the like), plastics (e.g., polymers such as polyethylene, polycarbonate, polypropylene, polystyrene, polyvinyl chloride, acrylonitrile butadiene styrene (ABS), and the like), composite materials (e.g., polymer resin and one or more fillers, such as for example, epoxy and fiberglass), or natural materials such as wood, or the like. The housing 102 and partition wall 104 can be formed together, such as in a casting or molding process, or can be formed separately and assembled, such as in a sheet metal forming and assembling process.

The first set of ports, having the first inlet 120, the first outlet 122, the second inlet 124 and the second outlet 126, can be vertically disposed and can be used for mounting the ventilator 100 with vertically disposed ducting. The second set of ports having the first inlet 130, the first outlet 132, the second inlet 134 and the second outlet 136, can be horizontally disposed and can be used for mounting the ventilator 100 with horizontally disposed ducting.

The housing 102 can define a first flowpath 116 extending from the first inlet chamber 108 to the first outlet chamber 110, and a second flowpath 118 extending from the second inlet chamber 112 to the second outlet chamber 114. Each of the first flowpath 116 and the second flowpath 118 can extend through the first chamber 106.

In accordance with an embodiment, the first chamber 106, the first inlet chamber 108, the first outlet chamber 110, the second inlet chamber 112 and the second outlet chamber 114 are configured in the housing 102 such that the first flowpath 116 and the second flowpath 118 cross at the first chamber 106. The first chamber 106 can be configured to accommodate a recovery core 150. Such that when the first flowpath 116 is used for exhausting stale indoor air out of the building and the second flowpath 118 is used for pumping fresh air from outdoor, the fresh air can be heated by recovering heat from the stale air.

The ventilator 100 can optionally include one or more fans 140, 142 for moving fluid, such as stale air and fresh air, through the housing 102 along the first flowpath 116 and/or along the second flowpath 118. Further, the one or more fans 140, 142 can be disposed upstream or downstream of the first chamber 106 and can be controlled independently or in concert. The fans can be controlled, such as by a controller, to ensure a balanced ventilation, i.e., same amount of stale air being exhausted out of the building as there is fresh air being pumped in through the first flowpath 116 and the second flowpath 118.

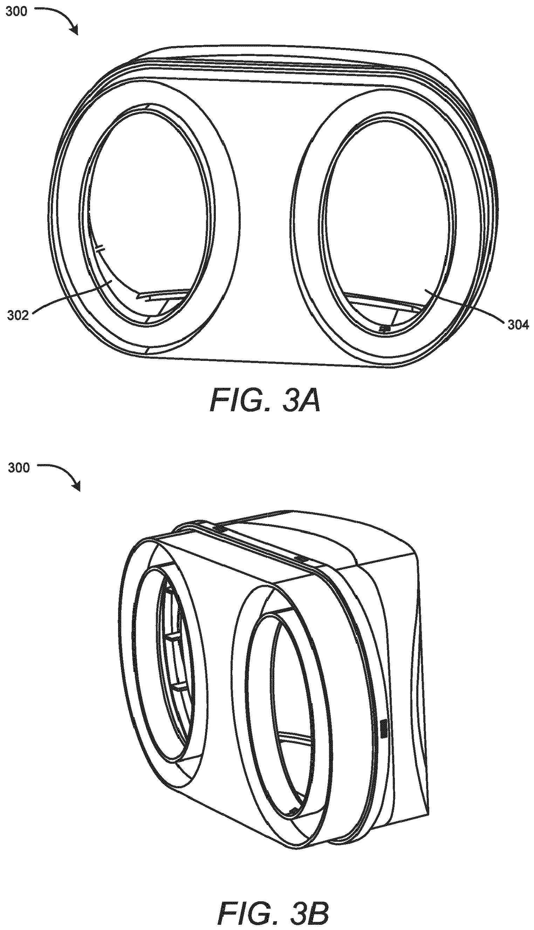

In an aspect, the ventilator 100 includes defrosting functionality to defrost a recovery core 150 positioned in the first chamber 106, wherein the ventilator 100 can be operated in a mode that enables redirection of the indoor air, after it has traversed the first flowpath 116, to the second flowpath 118, and simultaneously blocking inflow of the outdoor air. Re-circulation is enabled by using the first outlet and the second inlet of the set of port that are not connected to the ducting, which are fluidically coupled by a re-circulator, such as re-circulator 300 shown in FIGs. 3A and 3B. The first inlet and the second outlet of the set of ports that are not connected to the ducting can be blocked, such as by suitable caps.

Blocking of the first outlet and the second inlet of the set of ports that are connected to the ducting, such as first set of ports, and simultaneous opening of the first outlet and the second inlet of the set of port not connected to the ducting, such as second set of ports, is enabled by a set of dampers, such as dampers 164, 166 shown in FIG. 1.

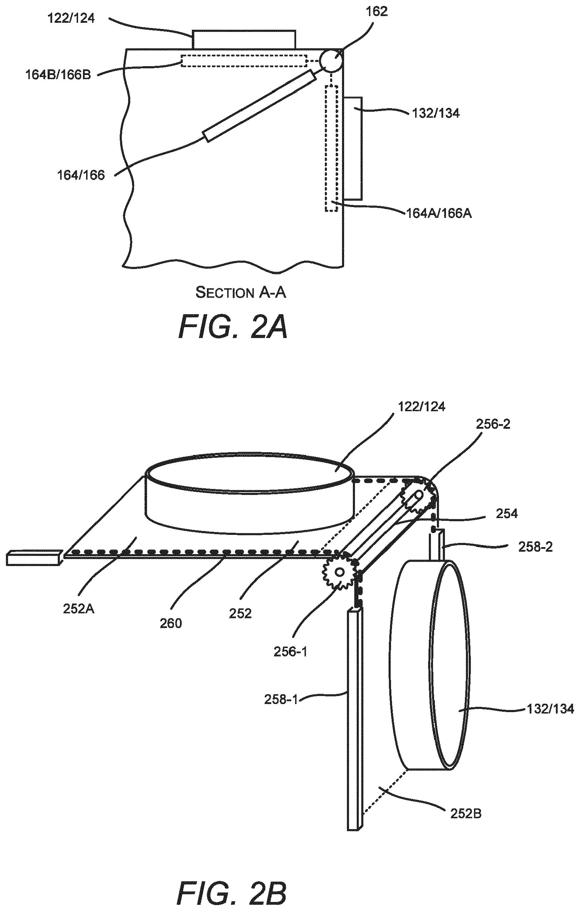

FIGs. 1 and 2A show working of the dampers 164, 166. The dampers 164, 166 can be configured to move between a first position 164A, 166A and a second position 164B, 166B, as shown in FIG. 2A. In the first position 164A, 166A the dampers 164, 166 can close the first outlet 132 and the second inlet 134 of the second set of ports, and in the second position 164B, 166B the dampers 164, 166 can close the first outlet 122 and the second inlet 124 of the first set of ports.

In an aspect, the dampers 164, 166 are operated by a single motor, such as motor 160 shown in FIG. 1, for movement between the respective first position 164A, 166A and the second position 164B, 166B. The dampers 164, 166 can be flap type dampers mounted on a common shaft 162 that is coupled to the motor 160 for movement of the dampers 164, 166 between the first position 164A, 166A and the second position 164B, 166B.

In the first position 164A, 166A of the dampers 164, 166, the first outlet 122 and the second inlet 124 of the first set of ports are open and the first outlet 132 and the second inlet 134 of the second set of ports is closed, thereby allowing indoor air flowing through the first flowpath 116 to exit through the first outlet 122, and the outdoor air can enter through the second inlet 124 of the first set of ports to flow along the second flowpath 118. The recovery core 150 positioned in the first chamber 106 can enable heat recovery from the indoor air and heating of the outdoor air.

In the second position 164B, 166B of the dampers 164, 166, the first outlet 122 and the second inlet 124 of the first set of ports are blocked and the first outlet 132 and the second inlet 134 of the second set of ports are open. Therefore, indoor air from the first flowpath 116 is directed through the first outlet 132 of the second set of ports, the re-circulator 300 and the second inlet 134, to the second flowpath 118. Recirculation of the warm indoor air through the recovery core 150 helps to defrost the recovery core 150.

As can be understood, when the second set of ports are used for installation of the ventilator, such as with horizontally oriented ducting, the heat recovery may be achieved in the second position 164B, 166B of the dampers 164, 166, and defrosting of the recovery core 150 may be achieved in the first position 164A, 166A of the dampers 164, 166. Also, the first outlet 122 and the second inlet 124 of the first set of ports would need to be fluidically coupled by the re-circulator 300, and the first inlet 120 and the second outlet 126 of the first set of ports would be blocked.

It is to be appreciated that, while FIGs. 1 and 2B show flap type dampers, scope of the present disclosure is not limited to the flap type dampers, and any other type of dampers can also be implemented using a single motor. For example, the dampers can be door shutter type dampers, shown in FIG. 2B.

As shown in FIG. 2B, the door shutter type dampers can include one or more flexible sheets 252 guided in a pair of parallelly arranged guide rails, such as guide rails 258-1 and 258-2 (guide rails 258, hereinafter) for movement along the guide rails 258, and a shaft 254 driven by a motor (not shown here). The shaft 254 can include one or more pairs of gears, such as gears 256-1 and 256-2 (gears 256, hereinafter). The gears can engage with perforations 260 provided on the sheet 252 such that when the shaft 254 is rotated by the motor, the engagement of the gears 256 with the perforations 260 results in movement of the sheet 252 along the guide rails 258. Rotation of the shaft 254 in a first direction can result in the sheets 252 moving to the first position, such as 252A, to close one or more ports, such as the first outlet port 122 and the second inlet 124 of the first set of ports. On the other hand, rotating the shaft 254 in the opposite direction can result in the sheet 252 moving to the second position, such as second position 252B, to close the other set of ports, such as the first outlet 132 and the second inlet 134 of the second set of ports. There can be a single sheet 252 with adequate width to cover two adjacently located ports. Alternatively, there can be two sheets 252, one for each port, each guided in a separate set of guide rails 258, driven by a single shaft 254 having two pairs of gears 256 and a single motor.

The sheet 252 may be made of a plastic material. The plastic material may have flexibility to wrap around the gears 256 and yet have rigidity to prevent flow of a fluid through a corresponding port.

FIG. 3A show re-circulator 300 used for fluidically coupling of the first outlet 122/132 and the second inlet 124/134 of the set of ports for recirculation of the indoor air through the second flowpath 118. The re-circulator 300 can include a first opening 302 and a second opening 304 spaced apart from the first opening 302, with a flow channel therebetween to fluidically couple the first opening 302 and the second opening 304. The first and the second openings 302/304 can be configured to be coupled to the first outlet 122/132 and the second inlet 124/134 of the set of ports that are not used for installation with the ducting.

FG. 3B shows the re-circulator 300 fixed to the ports, such as the first outlet 122 and the second inlet 124 of the first set of ports or the first outlet 132 and the second inlet 134 of the second set of ports of the ventilator 100.

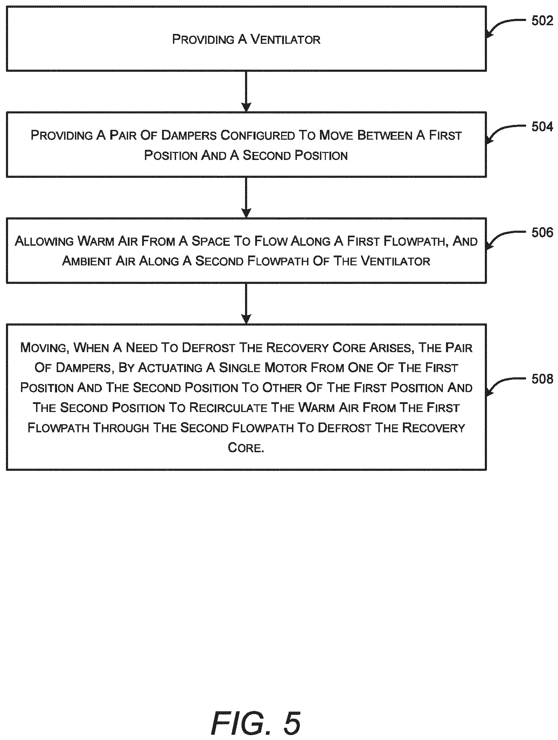

FIG. 5 is a method flow diagram for a method of defrosting a recovery core in a ventilator. The method includes the step 502 of providing a ventilator, such as ventilator 100 shown in FIG. 1. The ventilator can have a housing 102 having a first set of ports and a second set of ports. Each set of ports can include a first inlet 120/130, a first outlet 122/132, a second inlet 124/134 and a second outlet 126/136. The housing 102 can further include a partition wall 104 defining a first chamber 106, a first inlet chamber 108, a first outlet chamber 110, a second inlet chamber 112 and a second outlet chamber 114. The first inlets 120, 130 of the two sets of ports can be in fluidic communication with the first inlet chamber 108 and the first outlets 122, 132 of the two sets of ports can be in fluidic communication with the first outlet chamber 110. The second inlets 124, 134 of the two sets of ports can be in fluidic communication with the second inlet chamber 112 and the second outlets 126, 136 of the two sets of ports can be in fluidic communication with the second outlet chamber 114. The housing 102 can define a first flowpath 116 extending from the first inlet chamber 108 to the first outlet chamber 110 and a second flowpath 118 extending from the second inlet chamber 112 to the second outlet chamber 114, each of the first flowpath 116 and the second flowpath 118 can extend through the first chamber 106.

The method can further include the step 504 of providing a pair of dampers, such as but not limited to dampers 164 and 166 shown in FIGs. 1 and 2A, configured to move between a first position 164A, 166A and a second position 164B, 166B. In the first position 164A, 166A the dampers 164, 166 can close the first outlet 132 and the second inlet 134 the second set of ports, and in the second position 164A, 166A the dampers 164, 166 can close the first outlet 122 and the second inlet 124 of the first set of ports.

The method can further include the step 506 of allowing warm air from a space to flow along the first flowpath 116 extending from the first inlet chamber 108 to the first outlet chamber 110, and ambient air along a second flowpath 118 extending from the second inlet chamber 112 to the second outlet chamber 114. Each of the first flowpath 116 and the second flowpath 118 can extend through a recovery core, such as recovery core 150 shown in FIG. 1, provided in the first chamber 106.

The method can further include the step 508 of moving, when a need to defrost the recovery core 150 arises, the pair of dampers 164, 166, by actuating a single motor, such as motor 160 shown in FIG. 1. coupled to the pair of dampers 164,166, from one of the first position 164A, 166A and the second position 164B, 166B to other of the first position 164A, 166A and the second position 164B, 166B, to block flow of the ambient air and to recirculate the warm air from the first flowpath 116 through the second flowpath 118 to defrost the recovery core 150.

In accordance with additional or alternative embodiments, the step 502 of providing the ventilator may include coupling one of the first set of ports and the second set of ports to a set of ducting.

In accordance with additional or alternative embodiments, the method may further include the step of coupling a re-circulator, such as the re-circulator 300 shown in FIGs. 3A and 3B, to the first outlet 122/132 and the second inlet 124/134 of other of the first set of ports and the second set of ports.

In accordance with additional or alternative embodiments, the method may further include the step of: blocking the first inlet 120/130 and the second outlet 126/136 of other of the first set of ports and the second set of ports.

In accordance with additional or alternative embodiments, the step of moving the pair of dampers 164, 166 may include: moving the dampers 164, 166 from the first position 164A, 166A to the second position 164B, 166B, when the first set of ports are coupled to the ducting, and moving the dampers from the second position 164B, 166B to the first position 164A, 166A, when the second set of ports are coupled to the ducting.

In accordance with additional or alternative embodiments, the step 502 of providing the ventilator 100 may include: configuring the first set of ports in vertical orientation to enable coupling of the ventilator 100 to a set of vertically oriented ducting, and configuring the second set of ports in horizontal orientation to enable coupling of the ventilator 100 to a set of horizontally oriented ducting.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A ventilator (100) comprising:
a housing (102) comprising a first set of ports and a second set of ports, each set of ports comprising a first inlet (120, 130), a first outlet (122, 132), a second inlet (124, 134) and a second outlet (126, 136); and a partition wall (104) defining a first chamber (106), a first inlet chamber (108), a first outlet chamber (110), a second inlet chamber (112), and a second outlet chamber (114), wherein the first inlets of the two sets of ports are in fluidic communication with the first inlet chamber and the first outlets of the two sets of ports are in fluidic communication with the first outlet chamber, the second inlets of the two sets of ports are in fluidic communication with the second inlet chamber and the second outlets of the two sets of ports are in fluidic communication with the second outlet chamber; wherein the housing defines a first flowpath (116) extending from the first inlet chamber to the first outlet chamber and a second flowpath (118) extending from the second inlet chamber to the second outlet chamber, each of the first flowpath and the second flowpath extends through the first chamber; and
a pair of dampers (164, 166) configured to move between a first position (164A, 166A) and a second position (164B, 166B), wherein in the first position the dampers close the second inlet (134) and the first outlet (132) of the second set of ports, and in the second position the dampers close the first outlet (122) and the second inlet (124) of the first set of ports;
wherein the two dampers are coupled to a single motor (16) for movement between the respective first position and the second position.

2. The ventilator (100) of claim 1, wherein, in the first position (164A, 166A) of the dampers, the first flowpath (116) is used for passage of a first fluid and the second flowpath (118) is used for a second fluid, and the first chamber (106) is configured with a recovery core (150) for transfer of heat between the first fluid and the second fluid.

3. The ventilator (100) of claim 2, wherein the first outlet (132) and the second inlet (134) of the second set of ports are fluidically coupled to each other such that, in the second position of the dampers (164B, 166B), outflow of the first fluid through the first outlet and inflow of the second fluid through the second inlet of the first set of ports is blocked, and the first fluid from the first flowpath (116) is recirculated to the second flowpath (118), wherein the first inlet (130) and the second outlet (136) of the second set of ports are optionally blocked.

4. The ventilator (100) of claim 2 or 3, wherein, the first fluid is warm air from a space and the second fluid is cold ambient air, and wherein, in the first position (164A, 166A) of the dampers, the ventilator enables recovery of heat from the warm air, and in the second position of the dampers (164B, 166B), the warm air passing through the first flowpath (116) and the second flowpath (118) enables defrosting of the recovery core (150).

5. The ventilator (100) of claim 4, wherein the inlets (120, 124) and outlets (122, 126) of the first set of ports are vertically disposed for installation of the ventilator with vertically oriented ducting, and the inlets (130, 134) and outlets (132, 136) of the second set of ports are horizontally disposed for installation of the ventilator with horizontally oriented ducting, optionally wherein, when the second set of ports are used for installation of the ventilator with horizontally oriented ducting, the heat recovery is achieved in the second position of the dampers, and defrosting of the recovery core (150) is achieved in the first position (164A, 166A) of the dampers.

6. The ventilator (100) of claim 5, wherein, when the second set of ports are used for installation of the ventilator with horizontally oriented ducting, the first outlet (122) and the second inlet (124) of the first set of ports are fluidically coupled and the first inlet (130) and second outlet (136) of the second set of ports are blocked, wherein the ventilator optionally comprises a re-circulator (300) to fluidically couple the first outlet and the second inlet of the first set of ports or the first outlet and the second inlet of the second set of ports, and wherein the re-circulator optionally comprises a first opening (302) and a second opening (304) spaced apart from the first opening with a flow channel therebetween to fluidically couple the first opening and the second opening, and the first and the second openings are optionally configured to be coupled to the first outlet (122) and the second inlet (124) of the first set of ports and the first outlet (132) and the second inlet (134) of the second set of ports, respectively.

7. The ventilator (100) of any preceding claim, wherein the dampers (164, 166) are flap type dampers fixed to a common shaft (162), the shaft being configured for rotation by the single motor (160) such that rotation of the shaft in a first direction results in the flaps moving to the first position (164A, 166A) to close the second inlet (132) and the first outlet (134) of the second set of ports, and rotating the shaft in a second direction results in the flaps to move to the second position (164B, 166B) to close the first outlet (124) and the second inlet (122) of the first set of ports.

8. The ventilator (100) of any preceding claim, wherein the dampers (164, 166) are door shutter type dampers, comprising one or more flexible sheets (252) guided in a pair of parallelly arranged guide rails (258), and coupled to a common shaft (254) driven by the motor (160) such that rotation of the shaft in a first direction results in the sheet moving to the first position (252A) to close the second inlet (124) and the first outlet (122) of the first set of ports, and rotating the shaft in the opposite direction results in the sheet to move to the second position (252B) to close the first outlet (132) and the second inlet (134) of the second set of ports.

9. The ventilator (100) of claim 8, wherein the shaft comprises one or more pairs of gears (256) that are in engagement with corresponding perforations (260) provided in the sheet to move the sheet as the shaft is rotated, wherein the flexible sheet is optionally made of a plastic material, the plastic material having flexibility to wrap around the gears and yet having rigidity to prevent flow of a fluid through a corresponding opening of the inlets and outlets.

10. A method for defrosting a recovery core in a ventilator, comprising:
providing a ventilator (100) comprising a housing (102), the housing comprising a first set of ports and a second set of ports, each set of ports comprising a first inlet (120, 130), a first outlet (122, 132), a second inlet (124, 134), and a second outlet (126, 136); and a partition wall (104) defining a first chamber (106), a first inlet chamber (108), a first outlet chamber (110), a second inlet chamber (112), and a second outlet chamber (114), wherein the first inlets of the two sets of ports are in fluidic communication with the first inlet chamber and the first outlets of the two sets of ports are in fluidic communication with the first outlet chamber, the second inlets of the two sets of ports are in fluidic communication with the second inlet chamber and the second outlets of the two sets of ports are in fluidic communication with the second outlet chamber; wherein the housing defines a first flowpath (116) extending from the first inlet chamber to the first outlet chamber and a second flowpath (118) extending from the second inlet chamber to the second outlet chamber, each of the first flowpath and the second flowpath extends through the first chamber;
providing a pair of dampers (164, 166) configured to move between a first position (164A, 166A) and a second position (164B, 166B), wherein in the first position the dampers close the second inlet and the first outlet of the second set of ports, and in the second position the dampers close the first outlet and the second inlet of the first set of ports;
allowing warm air from a space to flow along a first flowpath extending from the first inlet chamber to the first outlet chamber, and ambient air along a second flowpath extending from the second inlet chamber to the second outlet chamber, each of the first flowpath and the second flowpath extends through a recovery core (150) provided in the first chamber; and
moving, when a need to defrost the recovery core (150) arises, the pair of dampers, by actuating a single motor (160) coupled to the pair of dampers, from one of the first position and the second position to other of the first position and the second position, to block flow of the ambient air and to recirculate the warm air from the first flowpath through the second flowpath to defrost the recovery core.

11. The method of claim 10, wherein the step of providing the ventilator includes coupling one of the first set and the second set of ports to a set of ducting.

12. The method of claim 11, further comprising step of coupling a re-circulator (300) to the first outlet and the second inlet of other of the first set and second set of ports.

13. The method of claim 11 or 12, further comprising step of blocking the first inlet and the second outlet of other of the first set and second set of ports.

14. The method of claim 11, 12 or 13, wherein the step of moving the pair of dampers, when a need to defrost the recovery core (150) arises, includes moving the dampers from the first position (164A, 166A) to the second position (164B, 166B), when the first set of ports are coupled to the ducting, and moving the dampers from the second position to the first position, when the second set of ports are coupled to the ducting.

15. The method of any of claims 11 to 14, wherein the step of providing the ventilator includes: configuring the first set of ports in vertical orientation to enable coupling of the ventilator to a set of vertically oriented ducting, and configuring the second set of ports in horizontal orientation to enable coupling of the ventilator to a set of horizontally oriented ducting.
